# EUROPEAN PATENT SPECIFICATION

(11) **EP 4 409 356 B1**
(45) Date of publication and mention of the grant of the patent: **15.04.2026**
(21) Application number: 22790377.0
(22) Date of filing: 26.09.2022
(51) Int. Cl.: G02F 1/01, G02F 1/313, G02B 6/12

(54) **OPTICAL COUPLING DEVICE AND RESPECTIVE METHOD FOR TUNING**
OPTISCHE KOPPLUNGSVORRICHTUNG UND ENTSPRECHENDES ABSTIMMUNGSVERFAHREN
DISPOSITIF DE COUPLAGE OPTIQUE ET PROCÉDÉ RESPECTIF DE RÉGLAGE

(30) Priority: 30.09.2021 IT 202100025160
(43) Date of publication of application: 07.08.2024
(73) Proprietor: PhotonPath S.r.l., 20158 Milano (IT)
(72) Inventor: PERINO, Alessandro, 20158 Milano (IT); DAMIANI, Elena, 20158 Milano (IT); OLIVEIRA MORAIS DE AGUIAR, Douglas, 20158 Milano (IT); GUGLIELMI, Emanuele, 20158 Milano (IT)
(74) Representative: Tirloni, Bartolomeo
(86) International application number: PCT/IT2022/050257
(87) International publication number: WO 2023/053153

(56) References cited:
- WO-A1-2015/018048
- CN-A- 104 104 011
- CN-A- 111 897 173
- JP-A- 2003 279 767
- JP-A- H06 326 348
- US-A- 6 002 823
- US-B1- 7 519 240
- US-B2- 8 837 879
- PIERO ORLANDI ET AL: "Tunable silicon photonics directional coupler driven by a transverse temperature gradient", OPTICS LETTERS, OPTICAL SOCIETY OF AMERICA, US, vol. 38, no. 6, 15 March 2013 (2013-03-15), pages 863 - 865, XP001580667, ISSN: 0146-9592, DOI: HTTP://DX.DOI.ORG/10.1364/OL.38.000863

## Description

### Technical field of the invention

The present invention relates to an optical coupling device and a method for tuning said device.

### State of the art

The present invention is placed in the field of photonics, that is the set of the technologies and of the methods for the generation, transmission, processing and reception of optical signal.

The term "optical" refers to an electromagnetic radiation that falls within a broadened neighbourhood of the visible optical band, and does not necessarily falling strictly within the visible optical band (i.e. indicatively 400-700 nm), for example this broadened neighbourhood of the visible optical band typically comprises the near infrared (for example wavelength between about 700 nm to about 2 µm).

In the field of photonics, optical coupling devices are known, in which an optical signal entering an input port is divided into two distinct optical signals, each exiting from a respective output port.

In one embodiment, an optical coupling device may comprise a pair of optical waveguides mutually optically coupled at a coupling region.

Tunable optical coupling devices are also known, in which a ratio between the optical powers of the two output optical signals (splitting ratio) can be dynamically varied, at a given wavelength (up to including the case of a ratio that goes from 0-100 to 100-0), and/or the wavelength at which a given ratio between the optical powers is obtained can be varied.

By the term "doping" it is meant, in the field of the semiconductors, the addition to the pure semiconductor (also called "intrinsic") of variable percentages of atoms of elements different with respect to the pure semiconductor (e.g. silicon, silicon carbide), in order to modify the physical properties of the material constituting the pure semiconductor. Typically, the doping improves the electric conductivity of the pure semiconductor. The types of doping are commonly two and are defined respectively as "n" type and "p" type. The types of doping and the operational properties that such types of doping confer to the pure semiconductor are known per se and will not be further described.

The document WO2020089495A1 discloses a tunable optical coupling device.

The document "Tunable silicon photonics directional coupler driven by a transverse temperature gradient", Orlandi et al., March 15, 2013/Vol. 38, No. 6/OPTICS LETTERS, discloses an optical coupling device that can be tuned by heating of a heating element (e.g. electric resistance) placed in proximity to one of the two waveguides to establish a thermal gradient between the two waveguides. It is in fact known that the temperature variation of a waveguide determines a variation of the optical properties of the material of which it is composed, allowing the adjustment of the ratio between the optical powers of the output signals (e.g. by variation of the refractive index of the heated waveguide).

Document CN 104 104 011 A discloses a hybrid integrated tunable laser technology with a large-scale wavelength tuning function.

US6002823A discloses tunable optical directional couplers including two optical waveguides arranged in close proximity along a coupling region; it further considers thermo-optic tuning achieved by applying heat to the coupling region through a heater element, in order to change the refractive index of polymer materials exhibiting a strong temperature dependence. The waveguides are arranged parallel along a longitudinal direction, and the coupling strength is controlled by the induced local temperature distribution.

### Summary of the invention

The Applicant has realized that the tuning of an optical coupling device by means of a heating element arranged in proximity to one of the waveguides (due to thermo-optical effect), as for example described in the aforementioned documents, is inefficient under many respects.

In fact, in order to heat the waveguide, it is first necessary to heat the heating element (e.g. by passage of current) and wait for the heat to transfer from the latter to the waveguide by thermal conduction through the layer that typically incorporates the waveguides (and sometimes even the heating element itself). It therefore follows a time delay between the instant in which the thermal power is generated in the heating element and the consequent temperature increase of the waveguide, which can make tuning unsuitable for the rapid times typical of the optical circuits.

Furthermore, to obtain a desired temperature increase of the waveguide, given the intrinsic thermal resistance of the materials typically used to make the device, such as for example the aforementioned layer (typically made of silicon oxide), it is necessary to significantly increase the temperature of the heating element, with consequent thermal dissipation and high energy consumption.

In addition, although the heating element is typically arranged in proximity to the waveguide to be heated, the thermal power generated is also partially transferred to the other waveguide ('thermal cross-talk'), resulting in an increase in the respective temperature and therefore an overall decrease in the thermal gradient between the two waveguides, limiting the range of values in which the aforementioned ratio between the optical powers can be varied and/or increasing the necessary temperatures (and therefore consumption).

The Applicant has therefore faced the problem of realizing an optical coupling device capable of being tuned, in particular by the thermo-optical effect, in an efficient, simple, rapid and cheap way.

According to the applicant, the above problem is solved by an optical coupling device and by a method for tuning said device according to the attached claims and/or having one or more of the following features.

According to an aspect the invention relates to an optical coupling device according to claim 1.

According to an aspect, the invention relates to a method for tuning an optical coupling device according to claim 10.

The Applicant has realized that, in order to tune an optical coupling device by heating, it is possible to heat one of the two optical waveguides thanks to direct injection of electric current into the optical waveguide itself (e.g. by exploiting the Joule effect), without having to provide any heating element distinct from the optical waveguide.

In this way the tuning by thermo-optical effect is achieved by heating of an optical waveguide in an efficient and rapid way, simplifying at the same time the structure of the device and limiting the heating of the other optical waveguide, thus obtaining a wide tuning range and/or a limited power consumption.

The Applicant believes that the injection of electric current into the optical waveguide does not interfere with the optical signal transmitted along the optical waveguide during the operation of the device.

The present invention in one or more of the above aspects may exhibit one or more of the following preferred features.

Preferably said second optical waveguide is made of semiconductor. In this way the waveguides can be made with the same technology, to the advantage of the simplicity of the device.

Preferably said first and second optical waveguide each comprise a respective main development line (e.g. a line of path of the optical signal).

Preferably said first optical waveguide is doped (at least in a tract from the first to the second electrode), preferably with a single type of doping. In this way the passage of electric current is improved.

Preferably a density of doping of the first optical waveguide at a contact area with respectively said first and second electrode is greater than a density of doping of a remaining part of the first optical waveguide. In this way, a reservoir for the charge carriers is created and/or the electric contact between electrodes and first optical waveguide is improved.

Preferably said density of doping at the contact area is greater than or equal to 10¹⁵ atoms/cm³, more preferably greater than or equal to 10¹⁷ atoms/cm³, and/or less than or equal to 10²¹ atoms/cm³, more preferably less than or equal to 10²⁰ atoms/cm³. Preferably said density of doping of the remaining part of the first optical waveguide is greater than or equal to 10¹⁴ atoms/cm³, more preferably greater than or equal to 10¹⁶ atoms/cm³, and/or less than or equal to 10¹⁸ atoms/cm³, more preferably less than or equal to 10¹⁷ atoms/cm³. Such densities of doping are particularly suitable for the transmission of electric currents while limiting the manufacturing costs and/or potential disturbances to the propagation of the optical signal.

Preferably said first optical waveguide (only) at said first and second electrode is a rib waveguide. Preferably said rib waveguide has section, on a plane (substantially) perpendicular to said main development line, which comprises a central portion and a first and a second lateral portion arranged at opposite sides of, and in continuity with, said central portion and having lower height with respect to the central portion. Preferably each of said first and second electrode is in (direct) electric contact with at least one of said first and second lateral portion. In this way the lateral portions provide sufficient space to arrange the electrodes while limiting the interference with the optical signal.

Preferably said first and second electrode are arranged externally to said first optical coupling tract. In this way the available space is used to place the electrodes.

Preferably each of said first and second electrode is in (direct) electric contact with both said first and second lateral portion. In this way the electric contact is improved.

Preferably said first and second optical waveguide are mutually electrically insulated. In this way the electric current is prevented from flowing into the second optical waveguide, heating it.

Preferably said first optical waveguide (more preferably each optical waveguide) is a channel waveguide at (entirely) said first (and respectively second) optical coupling tract. In this way the aforesaid electric insulation is achieved in constructively simple way.

Preferably said first and second lateral portion of said section of the first optical waveguide taper towards the central portion moving along said main development line from said contact area towards said first optical coupling tract. In this way the transition zone from "rib waveguide" to "channel waveguide" is effectively realized.

Preferably each electrode has section that tapers moving towards said first optical waveguide. In this way the electric contact is favoured.

Preferably said devices comprises a longitudinal plane of symmetry. In this way the device is rational.

Preferably said device comprises a transverse plane of symmetry (substantially) perpendicular to said longitudinal plane of symmetry. In this way the functioning of the device is improved.

Preferably said device comprises a layer of electrically insulating material (e.g. silicon oxide). Preferably said layer substantially entirely surrounds (e.g. with exception of the electrode areas) said first and second optical waveguide. In this way the device is robust and an electric separation between the optical waveguides is achieved.

### Brief description of the drawings

Figure 1 schematically shows a top view of the optical coupling device according to the present invention;
Figure 2 schematically shows a section along the plane AA of figure 1;
Figure 3 schematically shows a section along the plane BB of figure 1;

### Detailed description of some embodiments of the invention

The features and the advantages of the present invention will be further clarified by the following detailed description of some embodiments, presented by way of non-limiting example of the present invention, with reference to the attached figures (not to scale). In the figures, the number 99 indicates an optical coupling device. Exemplarily the device 99 comprises a first optical waveguide 1 made of semiconductor (e.g. silicon, silicon carbide, etc.) having a first input 10 and a first output 11, and a second optical waveguide 2 made of semiconductor having a second input 20 and a second output 21.

Exemplarily the first 1 and the second optical waveguide 2 are mutually optically coupled at respectively a first 3 and a second optical coupling tract 7 respectively interposed between the first input and the first output and between the second input and the second output.

Exemplarily the first 3 and the second optical coupling tract 7 have main development along a longitudinal direction 100.

Exemplarily the device 99 comprises a first electrode 8 and a second electrode 9 electrically connected to the first optical waveguide 1 at longitudinally opposite sides of, and externally to, the first optical coupling tract 3.

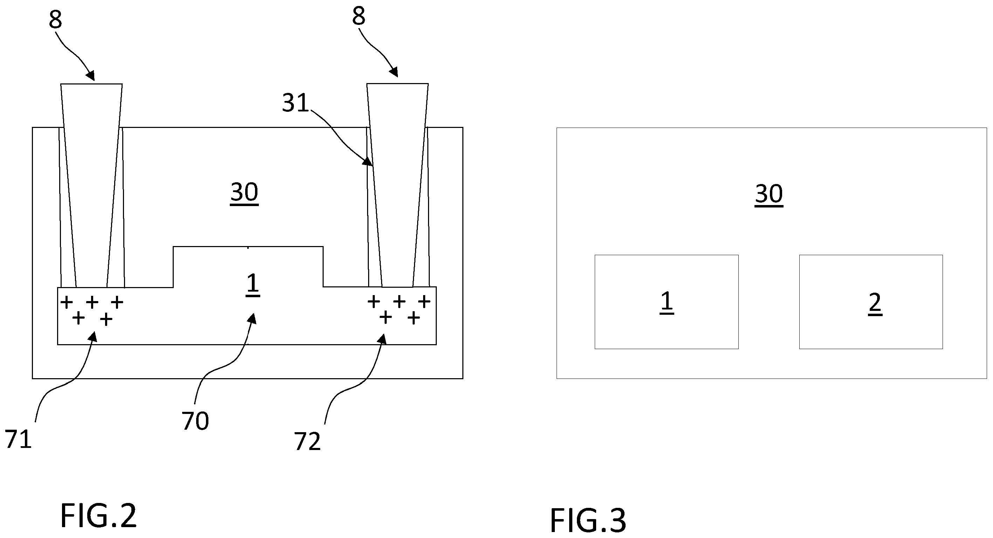

Exemplarily the first optical waveguide 1 is doped with only a single type of doping (i.e. "n" or "p") along its entirety, wherein a density of doping at a contact area with respectively the first 8 and the second electrode 9 (schematically indicated by the + signs in figure 2) is greater than a density of doping of the remaining part. Exemplarily the density of doping at the contact areas with the electrodes is equal to about 10¹⁹ atoms/cm³, and the density of doping of the remaining part is about 10¹⁶ atoms/cm³.

Exemplarily the first optical waveguide 1 only at the first 8 and second electrode 9 is a rib waveguide having a section, on a plane perpendicular to a main development line of the first optical waveguide (e.g. the plane AA), which comprises a central portion 70 and a first 71 and a second lateral portion 72 arranged at opposite sides of, and in continuity with, the central portion 70 and having a lower height with respect to the central portion 70 (i.e. the section has an inverted T profile).

Exemplarily each first 8 and second electrode 9 is arranged in direct electric contact with both the first 71 and the second lateral portion 72.

Exemplarily the first 1 and the second optical waveguide 2 are mutually electrically insulated, and to this end they both are a channel waveguide respectively at entirely the first 3 and the second optical coupling tract 7.

Exemplarily the lateral portions 71, 72 of the section of the first optical waveguide taper towards the central portion 70 moving along the main development line from the contact area with the electrode towards the first optical coupling tract 3. Advantageously, at the first optical coupling tract 3 the first optical waveguide 1 has the same cross-sectional shape (fig. 3) as the central portion 70.

Exemplarily each electrode is made of metallic material with section that tapers moving towards the first optical waveguide 1.

Exemplarily the device 99 comprises a layer 30 of electrically insulating material (e.g. silicon oxide) which substantially entirely surrounds (with exception of the electrode areas) the first and second optical waveguide. Exemplarily the layer 30 is equipped with openings 31 at the electrodes to allow electric contact between the electrode and the optical waveguide.

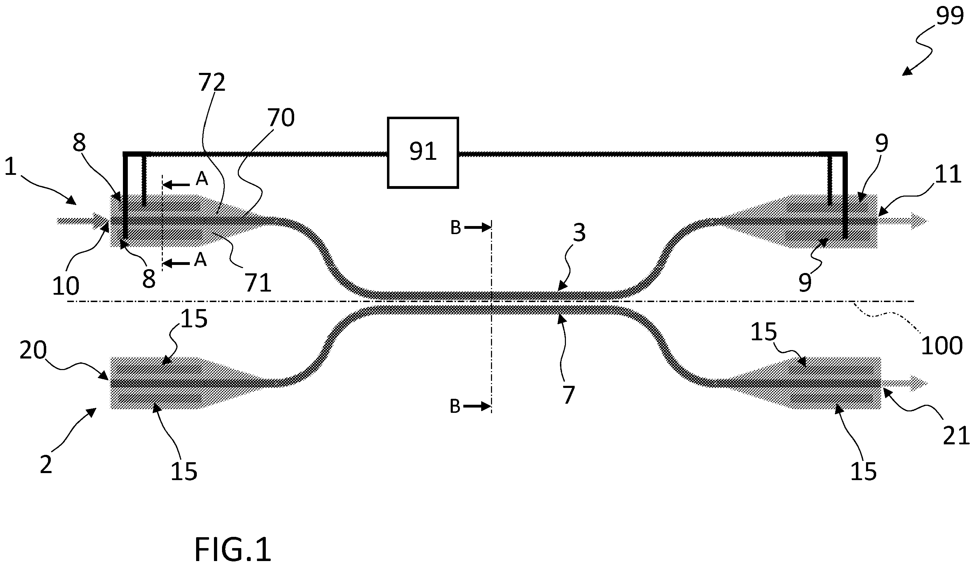

Exemplarily the device comprises a longitudinal plane of symmetry (which crosses the plane of the figures 1 and 4 along the longitudinal direction 100), and a transverse plane of symmetry perpendicular to the longitudinal plane of symmetry (in figure 1 coinciding with the section plane BB).

Exemplarily the second optical waveguide has all the features of the first optical waveguide (e.g. it mirrors the first optical waveguide with respect to the longitudinal plane of symmetry, fig. 1) and the device comprises a pair of electrodes 15 electrically connected to the second optical waveguide at longitudinally opposite sides of the second optical coupling tract 7. In this way it is possible to tune the device by heating the second optical waveguide by injecting electric current directly into the second optical waveguide (alternatively to heating the first optical waveguide). In this way the device is highly versatile.

In use, the device 99 exemplarily allows to divide an optical signal entering the first input 10, in a pair of optical signals exiting respectively from the first output 11 and from the second output 21 (in the figures the optical signals are represented by oriented arrows).

Optionally (not shown), an optical signal can be fed into the second input and divided between the outputs.

Exemplarily, the device 99 can be tuned to dynamically vary the ratio between the optical powers of the signals exiting respectively from the first output 11 and from the second output 21.

Exemplarily for tuning the device 99 it is provided applying an electric voltage difference between the first 8 and the second electrode 9 to provide a passage of electric current (not shown) into the first optical coupling tract 3 (exemplarily along substantially all the first optical waveguide), and adjusting a value of the electric voltage difference to vary the aforementioned ratio between the optical powers. The passage of electric current exemplarily heats the first optical waveguide 1 by means of Joule effect.

Exemplarily in figure 1 it is schematically shown a voltage generator 91 electrically connected to the first 8 and the second electrode 9 for applying the aforementioned electric voltage difference.

## Claims

1. Optical coupling device (99) comprising:
- a first optical waveguide (1) made of semiconductor having a first input (10) and a first output (11);
- a second optical waveguide (2) having a second input (20) and a second output (21); wherein said first (1) and second optical waveguide (2) are mutually optically coupled at respectively a first (3) and a second optical coupling tract (7) respectively interposed between said first input (10) and first output (11) and between said second input (20) and second output (21),
wherein said first (3) and second optical coupling tract (7) have main development along a longitudinal direction (100);
- a first electrode (8) and a second electrode (9) electrically connected to said first optical waveguide (1) at longitudinally opposite sides of said first optical coupling tract (3),
**characterized in that** said device (99) is configured for applying an electric voltage difference between said first (8) and second electrode (9) to provide a passage of electric current into said first optical coupling tract (3).

2. Device (99) according to claim 1, wherein said first optical waveguide (1) is doped at least in a tract from the first (8) to the second electrode (9), with a single type of doping, wherein a density of doping of the first optical waveguide (1) at a contact area with respectively said first (8) and second electrode (9) is greater than a density of doping of a remaining part of the first optical waveguide, wherein said density of doping at the contact area is greater than or equal to 10¹⁵ atoms/cm³, and less than or equal to 10²¹ atoms/cm³, and wherein said density of doping of the remaining part of the first optical waveguide is greater than or equal to 10¹⁴ atoms/cm³, and less than or equal to 10¹⁸ atoms/cm³.

3. Device (99) according to any one of the previous claims, wherein said first optical waveguide (1) at said first (8) and second electrode (9) is a rib waveguide having section, on a plane substantially perpendicular to a main development line of the first optical waveguide (1), which comprises a central portion (70) and a first (71) and a second lateral portion (72) arranged at opposite sides of, and in continuity with, said central portion (70) and having lower height with respect to the central portion (70), wherein each of said first (8) and second electrode (9) is in electric contact with at least one of said first (71) and second lateral portion (72).

4. Device (99) according to claim 3, wherein each of said first (8) and second electrode (9) is in electric contact with both said first (71) and second lateral portion (72).

5. Device (99) according to any one of the previous claims, wherein said first (8) and second electrode (9) are arranged externally to said first optical coupling tract (3), wherein said first (1) and second optical waveguide (2) are mutually electrically insulated, and wherein said first optical waveguide (1) is a channel waveguide at said first optical coupling tract (3).

6. Device (99) according to claim 5, wherein said second optical waveguide (2) is a channel waveguide at said second optical coupling tract (7).

7. Device (99) according to claim 3 or 4, wherein said first (71) and second lateral portion (72) of said section of the first optical waveguide (1) taper towards the central portion (70) moving along said main development line from a respective contact area with a respective electrode (8, 9) towards said first optical coupling tract (3).

8. Device (99) according to any one of the previous claims, wherein each electrode (8, 9) has section that tapers moving towards said first optical waveguide (1), and wherein said device (99) comprises a layer (30) of electrically insulating material which substantially entirely surrounds said first (1) and second optical waveguide (2).

9. Device (99) according to any one of the previous claims, comprising a longitudinal plane of symmetry and a transverse plane of symmetry substantially perpendicular to said longitudinal plane of symmetry, and wherein said second optical waveguide (2) is made of semiconductor.

10. Method for tuning an optical coupling device, the method comprising:
- providing said optical coupling device (99) according to any one of the previous claims;
- applying an electric voltage difference between said first (8) and second electrode (9) to provide a passage of electric current into said first optical coupling tract (3);
- introducing an optical signal as input to said first input (10);
- adjusting a value of said electric voltage difference to vary a ratio between optical powers of a first optical signal exiting from said first output (11) and a second optical signal exiting from said second output (21).

## Patentansprüche

1. Optische Kopplungsvorrichtung (99), umfassend:
- einen ersten optischen Wellenleiter (1) aus Halbleiter mit einem ersten Eingang (10) und einem ersten Ausgang (11);
- einen zweiten optischen Wellenleiter (2) mit einem zweiten Eingang (20) und einem zweiten Ausgang (21);
wobei der erste (1) und zweite optische Wellenleiter (2) gegenseitig optisch gekoppelt sind jeweils an einem ersten (3) und einem zweiten optischen Kopplungsabschnitt (7), jeweils angeordnet zwischen dem ersten Eingang (10) und dem ersten Ausgang (11) sowie zwischen dem zweiten Eingang (20) und dem zweiten Ausgang (21), wobei der erste (3) und zweite optische Kopplungsabschnitt (7) eine Hauptausdehnung entlang einer Längsrichtung (100) aufweisen;
- eine erste Elektrode (8) und eine zweite Elektrode (9), elektrisch verbunden mit dem ersten optischen Wellenleiter (1) an longitudinal entgegengesetzten Seiten des ersten optischen Kopplungsabschnitts (3),
**dadurch gekennzeichnet, dass** die Vorrichtung (99) dazu konfiguriert ist, eine elektrische Spannungsdifferenz zwischen der ersten (8) und der zweiten Elektrode (9) anzulegen, um einen Durchgang von elektrischem Strom in den ersten optischen Kopplungsabschnitt (3) bereitzustellen.

2. Vorrichtung (99) nach Anspruch 1, wobei der erste optische Wellenleiter (1) zumindest in einem Abschnitt von der ersten (8) bis zur zweiten Elektrode (9) mit einem einzigen Dotierungstyp dotiert ist, wobei eine Dotierungsdichte des ersten optischen Wellenleiters (1) in einem Kontaktbereich mit jeweils der ersten (8) und zweiten Elektrode (9) größer ist als eine Dotierungsdichte eines verbleibenden Teils des ersten optischen Wellenleiters, wobei die Dotierungsdichte im Kontaktbereich größer oder gleich 10¹⁵ Atomen/cm³ und kleiner oder gleich 10²¹ Atomen/cm³ ist, und wobei die Dotierungsdichte des verbleibenden Teils des ersten optischen Wellenleiters größer oder gleich 10¹⁴ Atomen/cm³ und kleiner oder gleich 10¹⁸ Atomen/cm³ ist.

3. Vorrichtung (99) nach einem beliebigen der vorhergehenden Ansprüche, wobei der erste optische Wellenleiter (1) an der ersten (8) und zweiten Elektrode (9) ein Rippenwellenleiter ist, der einen Querschnitt aufweist, auf einer Ebene im Wesentlichen senkrecht zu einer Hauptverlaufsrichtung des ersten optischen Wellenleiters (1), der einen zentralen Abschnitt (70) und einen ersten (71) und einen zweiten lateralen Abschnitt (72) umfasst, angeordnet an entgegengesetzten Seiten von und in Kontinuität mit dem zentralen Abschnitt (70) und mit geringerer Höhe im Vergleich zum zentralen Abschnitt (70), wobei jede der ersten (8) und zweiten Elektrode (9) in elektrischem Kontakt mit zumindest einem des ersten (71) und zweiten lateralen Abschnitts (72) steht.

4. Vorrichtung (99) nach Anspruch 3, wobei jede der ersten (8) und zweiten Elektrode (9) in elektrischem Kontakt sowohl mit dem ersten (71) als auch mit dem zweiten lateralen Abschnitt (72) steht.

5. Vorrichtung (99) nach einem beliebigen der vorhergehenden Ansprüche, wobei die erste (8) und zweite Elektrode (9) außerhalb des ersten optischen Kopplungsabschnitts (3) angeordnet sind, wobei der erste (1) und zweite optische Wellenleiter (2) gegenseitig elektrisch isoliert sind, und wobei der erste optische Wellenleiter (1) ein Kanalwellenleiter an dem ersten optischen Kopplungsabschnitt (3) ist.

6. Vorrichtung (99) nach Anspruch 5, wobei der zweite optische Wellenleiter (2) ein Kanalwellenleiter an dem zweiten optischen Kopplungsabschnitt (7) ist.

7. Vorrichtung (99) nach Anspruch 3 oder 4, wobei der erste (71) und zweite laterale Abschnitt (72) des Querschnitts des ersten optischen Wellenleiters (1) sich zum zentralen Abschnitt (70) hin verjüngen, beim Bewegen entlang der Hauptverlaufsrichtung von einem jeweiligen Kontaktbereich mit einer jeweiligen Elektrode (8, 9) zu dem ersten optischen Kopplungsabschnitt (3).

8. Vorrichtung (99) nach einem beliebigen der vorhergehenden Ansprüche, wobei jede Elektrode (8, 9) einen Querschnitt aufweist, der sich beim Bewegen in Richtung des ersten optischen Wellenleiters (1) verjüngt, und wobei die Vorrichtung (99) eine Schicht (30) aus elektrisch isolierendem Material umfasst, die den ersten (1) und zweiten optischen Wellenleiter (2) im Wesentlichen vollständig umgibt.

9. Vorrichtung (99) nach einem beliebigen der vorhergehenden Ansprüche, umfassend eine longitudinale Symmetrieebene und eine transversale Symmetrieebene, die im Wesentlichen senkrecht zu der longitudinalen Symmetrieebene ist, und wobei der zweite optische Wellenleiter (2) aus Halbleiter hergestellt ist.

10. Verfahren zum Einstellen einer optischen Kopplungsvorrichtung, das Verfahren umfassend:
- Bereitstellen der optischen Kopplungsvorrichtung (99) nach einem beliebigen der vorhergehenden Ansprüche;
- Anlegen einer elektrischen Spannungsdifferenz zwischen der ersten (8) und der zweiten Elektrode (9), um einen Durchgang von elektrischem Strom in den ersten optischen Kopplungsabschnitt (3) bereitzustellen;
- Einführen eines optischen Signals als Eingang an dem ersten Eingang (10);
- Einstellen eines Wertes der elektrischen Spannungsdifferenz, um ein Verhältnis zwischen optischen Leistungen eines ersten optischen Signals, das aus dem ersten Ausgang (11) austritt, und eines zweiten optischen Signals, das aus dem zweiten Ausgang (21) austritt, zu variieren.

## Revendications

1. Dispositif de couplage optique (99) comprenant :
- un premier guide d'onde optique (1) réalisé en semi-conducteur ayant une première entrée (10) et une première sortie (11) ;
- un second guide d'onde optique (2) ayant une seconde entrée (20) et une seconde sortie (21) ;
dans lequel ledit premier (1) et second guide d'onde optique (2) sont mutuellement couplés optiquement au niveau respectivement d'un premier (3) et d'un second tronçon de couplage optique (7) respectivement interposé entre ladite première entrée (10) et ladite première sortie (11) et entre ladite seconde entrée (20) et ladite seconde sortie (21),
dans lequel ledit premier (3) et second tronçon de couplage optique (7) présentent un développement principal selon une direction longitudinale (100) ;
- une première électrode (8) et une seconde électrode (9) électriquement connectées audit premier guide d'onde optique (1) sur des côtés longitudinalement opposés dudit premier tronçon de couplage optique (3),
**caractérisé en ce que** ledit dispositif (99) est configuré pour appliquer une différence de tension électrique entre ladite première (8) et ladite seconde électrode (9) afin de fournir un passage de courant électrique dans ledit premier tronçon de couplage optique (3).

2. Dispositif (99) selon la revendication 1, dans lequel ledit premier guide d'onde optique (1) est dopé au moins dans un tronçon allant de ladite première (8) à ladite seconde électrode (9), avec un seul type de dopage, dans lequel une densité de dopage du premier guide d'onde optique (1) au niveau d'une zone de contact avec respectivement ladite première (8) et ladite seconde électrode (9) est supérieure à une densité de dopage d'une partie restante du premier guide d'onde optique, dans lequel ladite densité de dopage au niveau de la zone de contact est supérieure ou égale à 10¹⁵ atomes/cm³ et inférieure ou égale à 10²¹ atomes/cm³, et dans lequel ladite densité de dopage de la partie restante du premier guide d'onde optique est supérieure ou égale à 10¹⁴ atomes/cm³ et inférieure ou égale à 10¹⁸ atomes/cm³.

3. Dispositif (99) selon une quelconque des revendications précédentes, dans lequel ledit premier guide d'onde optique (1) au niveau de ladite première (8) et seconde électrode (9) est un guide d'onde à nervure ayant une section, sur un plan sensiblement perpendiculaire à une ligne de développement principale du premier guide d'onde optique (1), qui comprend une portion centrale (70) et une première (71) et une seconde portion latérale (72) disposées sur des côtés opposés de, et en continuité avec, ladite portion centrale (70) et ayant une hauteur inférieure par rapport à la portion centrale (70), dans lequel chacune de ladite première (8) et seconde électrode (9) est en contact électrique avec au moins une de ladite première (71) et seconde portion latérale (72).

4. Dispositif (99) selon la revendication 3, dans lequel chacune de ladite première (8) et seconde électrode (9) est en contact électrique avec à la fois ladite première (71) et ladite seconde portion latérale (72).

5. Dispositif (99) selon une quelconque des revendications précédentes, dans lequel ladite première (8) et seconde électrode (9) sont disposées extérieurement audit premier tronçon de couplage optique (3), dans lequel ledit premier (1) et second guide d'onde optique (2) sont mutuellement électriquement isolés, et dans lequel ledit premier guide d'onde optique (1) est un guide d'onde à canal au niveau dudit premier tronçon de couplage optique (3).

6. Dispositif (99) selon la revendication 5, dans lequel ledit second guide d'onde optique (2) est un guide d'onde à canal au niveau dudit second tronçon de couplage optique (7).

7. Dispositif (99) selon la revendication 3 ou 4, dans lequel ladite première (71) et seconde portion latérale (72) de ladite section du premier guide d'onde optique (1) s'effilent vers la portion centrale (70) en se déplaçant le long de ladite ligne de développement principal depuis une zone de contact respective avec une électrode respective (8, 9) vers ledit premier tronçon de couplage optique (3).

8. Dispositif (99) selon une quelconque des revendications précédentes, dans lequel chaque électrode (8, 9) présente une section qui s'effile en se déplaçant vers ledit premier guide d'onde optique (1), et dans lequel ledit dispositif (99) comprend une couche (30) de matériau électriquement isolant qui entoure substantiellement entièrement ledit premier (1) et second guide d'onde optique (2).

9. Dispositif (99) selon une quelconque des revendications précédentes, comprenant un plan longitudinal de symétrie et un plan transversal de symétrie sensiblement perpendiculaire audit plan longitudinal de symétrie, et dans lequel ledit second guide d'onde optique (2) est réalisé en semi-conducteur.

10. Procédé de réglage d'un dispositif de couplage optique, le procédé comprenant :
- fournir ledit dispositif de couplage optique (99) selon une quelconque des revendications précédentes ;
- appliquer une différence de tension électrique entre ladite première (8) et ladite seconde électrode (9) afin de fournir un passage de courant électrique dans ledit premier tronçon de couplage optique (3) ;
- introduire un signal optique en entrée audit premier entrée (10) ;
- ajuster une valeur de ladite différence de tension électrique pour faire varier un rapport entre des puissances optiques d'un premier signal optique sortant de ladite première sortie (11) et d'un second signal optique sortant de ladite seconde sortie (21).
